# EUROPEAN PATENT SPECIFICATION

(11) **EP 1 230 179 B1**
(45) Date of publication and mention of the grant of the patent: **31.03.2004**
(21) Application number: 00964139.0
(22) Date of filing: 08.09.2000
(51) Int. Cl.: C03B 37/05

(54) **MANUFACTURE OF MINERAL WOOL PRODUCTS**
HERSTELLUNG VON PRODUKTEN AUS MINERALWOLLE
FABRICATION DE PRODUITS DE LAINE MINERALE

(30) Priority: 15.09.1999 GB 9921841; 11.11.1999 EP 99309256
(43) Date of publication of application: 14.08.2002
(73) Proprietor: Rockwool International A/S, 2640 Hedehusene (DK)
(72) Inventor: Rasmussen, Svend Grove, DK-4000 Roskilde (DK)
(74) Representative: Lawrence, Peter Robin Broughton
(86) International application number: PCT/EP2000/008771
(87) International publication number: WO 2001/019742

(56) References cited:
- WO-A-92/06047
- WO-A-92/12939
- WO-A-92/12940
- WO-A-96/38391
- US-A- 5 131 935

## Description

The invention relates to the manufacture of man-made vitreous fibre (MMVF) products by centrifugal cascade processes and in particular to ways of optimising, in a single apparatus, the production of different grades of product from that apparatus.

Centrifugal cascade processes for making such products are described in, for instance, WO-A-92/06047, WO-A-92/12939, WO-A-92/12940, GB-A-1,599,117, WO-A-96/38391, WO-A-99/51535 and US-A-5,131,935.

The processes comprise using apparatus which comprises
a set of at least three rotors mounted on a housing each for rotation about a different substantially horizontal axis and arranged such that when the rotors are rotating melt poured onto the periphery of the top rotor in the set is thrown onto the periphery of each subsequent rotor in turn and fibres are thrown off the rotors,
air supply means for blowing the fibres axially forward from the spinner and which comprise a primary air supply slot associated with each of the subsequent rotors wherein each slot has an internal diameter substantially the same as the external diameter of the periphery of its associated rotor and is constructed for discharging a primary air blast substantially parallel to that periphery as a wall jet, and
binder supply means on or adjacent to the spinner for spraying binder onto the fibres as they are thrown off each of the subsequent rotors,
and in these processes fibres are formed by pouring melt onto the top rotor while the rotors are rotating, the primary air blasts are being discharged and binder is being sprayed outwardly.

The primary air supply slot is a slot-shaped orifice which may be an open slot, a slot divided along its length by a series of blades or an arrangement of individual outlets which, together, generate a slot-shaped flow of air from the orifices over the associated rotor.

Usually the binder supply means include at least one binder discharge orifice on each of the subsequent rotors positioned within the periphery of the rotor and rotating with the rotor for spraying binder outwardly onto the fibres as they are thrown off the rotor and carried forward from the spinner.

In these processes, a cloud of fibres and binder is formed and is carried forwards from the spinner and the fibres and binder are collected as a web. In some instances the web can be used without major manipulation, for instance simply after curing the binder. Generally, however, the web is cross-lapped or otherwise laminated into a batt and is thereby converted to the desired shape and size before curing the binder.

Various velocities has been proposed in the literature for the primary air. For instance values of 60 to 170m/s are proposed in WO-A-96/38391, values of 100 to 200m/s are proposed for low density products in WO-A-92/12939 and WO-A-92/12940, and values of above 100m/s are proposed in US-A-5,131,935, apparently in the context both of low density products and high density products (above 100kg/m³⁾.

The primary air which provides the wall jets serves predominantly to promote fibre formation, and also to provide some transport air to carry the cloud of fibres away. Additionally there can be secondary air from slots displaced outwardly from the primary air slots, and this secondary air serves predominantly to provide transport of the cloud of fibres away from the spinner. Instead of or in addition to this secondary air, air can also be supplied from various other positions in or around the spinner and this can be referred to herein as a tertiary air. For instance the induced or forced secondary air blast which is described in WO-A-96/38391 is tertiary air in the context of the present application.

It is conventional to use a single apparatus for making a range of products. One very simple change that can be made is in the density of the products.

When a higher density products is required, the change generally merely involves increasing the amount of binder and cross-lapping more layers of the web so as to give a wool layer having a higher weight per unit area, which is then compressed to the desired density and cured. An important property of high density products is the binder distribution on a micro-level, and this is expressed by de-lamination strength, which should be as high as possible.

When a lower density (for instance below 100kg/m³ and preferably below 60kg/m³) product is required, the change generally merely involves reducing the amount of binder and cross-lapping fewer layers and/or sometimes using the web without cross-lapping. Tensile strength, compressibility, softness and good loft are particularly important in such products.

Although the primary air is used for the purpose of promoting fibre formation by attenuating the fibres as they are being thrown off the rotors, the present invention is based on the realisation that the primary air can also have a significant impact on the bonding of the fibres to one another. Thus we have surprisingly found that changing the primary air velocity simultaneously changes fibre formation, fibre aggregation and the binder distribution, and that this effect can be utilised to improve the production of different product types in a single apparatus.

Accordingly, in the invention we make a web by the general process described above and consolidate and cure the web or a batt formed of a laminate of the web, and the process is conducted alternately
(a) with each primary air blast having a velocity of at least 100m/sec and the product has a density of at least 70kg/m³, usually at least 100kg/m³, and
(b) with each primary air blast having a lower velocity below 100m/sec (usually below 90m/sec) and the product has a density of below 70, generally below 60, kg/m³.

Although it is essential in the invention that, on any one apparatus, both the defined low density products and the defined high density products should be made, it is not essential that, in any one day's operation, both types of product should be made. It is merely essential that, from time to time, the same apparatus should be used for making the two defined classes of product with the defined changes in primary air velocity. Naturally the same apparatus may also be used for making a range of different low density products and/or for making a range of different high density products.

The binder (and optional additives) is preferably sprayed from orifices in the front of one or more of the subsequent rotors outwardly onto the fibres as they are thrown off the rotor.

The amount of binder is usually varied so as to be consistent with the amounts that are conventionally used for making the various products. Typically the amount of binder is 0.5 to 5%, often 1.5 or 2% to 4% dry weight based on the weight of the final product. The binder is usually an organic resin (e.g. phenol or urea formaldehydes) of conventional type for MMVF products. The binder is usually suppled as an aqueous solution or dispersion, but it may be a powder.

Other additives include accelerators to speed up curing, mineral oil, silicone oil or other surfactants creating hydrophobia, surfactants creating hydrophilia, graphite, aluminium or other additives improving insulation value and additives improving fire resistance.

A preferred additive is graphite in the form of particles, especially lamellar particles. Air-laid MMVF products comprising graphite are described in our co-pending application no. WO-A-00/17120, claiming priority from European patent application no. EP-A-0 989 103 and British patent application no. GB-A-9 916 175.4. In the present invention the graphite may have any of the features described in that application. The present invention may be applied to produce any of the products described in that application and other graphite-containing products. Further products containing further preferred additives are disclosed in our co-pending application WO-A1-00/17121. The additives include silicon, aluminium (powder or flakes), mica, silica and titania and mixtures thereof. They may have any of the features described in that application. Any of the products described in that application may be made by the method of the present invention, as may other products containing these additives. Other additives known for improving thermal insulation in different products may also be included, for instance germanium, carbon black, fibrous potassium titanate, amorphous silica, fumed silica, precipitated silica and fused silica.

In general, additives which are flake-shaped or lamellar-shaped are preferred. The particle size is preferably very small, for instance as indicated in those applications.

The primary air which provides the wall jets promotes attenuation of the fibres during their initial formation, and also provides air for transporting the cloud of fibres away from the spinner. This air is conveniently referred to as the primary air. Each slot may be provided by a series of adjacent nozzles.

Each of the subsequent rotors generally has a diameter of from 150 to 400mm, often in the range 220 to 350mm. The area of the orifices through which the primary air is blasted on each subsequent rotor is generally in the range 100 to 400, often around 150 to 250, cm².

Preferably there are secondary air slots displaced outwardly form the primary air for providing a secondary air stream, predominantly to facilitate transport of the cloud of fibres forwards from the spinner. These air slots also may be a series of nozzles.

The velocity of the secondary air as it emerges from its nozzles or other air supply orifices is generally from 50 to 100% of the velocity of the primary air. The secondary air slots are preferably substantially concentric with the first air slots and often extend over substantially the same angular areas of each of the subsequent rotors as the primary air slots. The outward displacement of the secondary slots is generally such that their innermost edge is from 50 to 500mm, often from 100 to 300mm, from the periphery of the rotor. The area of the secondary air slots is generally in the range 50 to 150, typically around 100, cm².

The primary and secondary air slots may each have a width typically of 5 to 30mm, preferably 10 to 15mm.

It is not essential that there should be secondary air on each (or any) of the subsequent rotors. For instance it can be preferred to have primary air only on the first subsequent rotor and secondary air on the remaining two subsequent rotors (when the spinner consists of four rotors). Generally the secondary air slots (and the primary air slots) extend over 1/3 to ½ of the periphery of each of the subsequent rotors with which each is associated.

Irrespective of whether or not secondary air (as explained above) is provided on any rotor, it can be preferred to have tertiary area, for instance the air described in WO-A-96/38391 and which is blown or induced around the spinner.

The primary air may emerge from its respective slots wholly in the axial direction but often it has a tangential component over part or all of the length of each of the primary air slots, for instance as described in GB-A-1,559,117 and in WO-A-92/06047. The secondary air may have a direction which is wholly axial as it emerges from the secondary air slots, or it may emerge with an angle of, for instance, up to 10° or 20° from the axial. Generally it emerges substantially parallel with the surface of the associated rotor, and thus substantially parallel with the primary air as that emerges initially adjacent to the surface of the associated rotor.

The total apparatus generally includes a collecting chamber with a collector moving through it and on which the web is collected. Two, three or more spinners may supply the fibres to a single collecting chamber. The overall construction of the spinner and the overall apparatus may be conventional and may be as described in, for instance, WO-A-92/06047 or WO-A-96/38391. The melt is preferably a rock, stone or slag melt.

The primary air velocity of above 100m/sec is used when the apparatus is to make high density products, typically having densities in the range of 100 to 300, often 150 to 200kg/m³. Typically the primary air velocity is above 110 m/sec, often above 150 m/sec. The upper limit is, in practice, mainly controlled by the primary air velocities which are conventionally available in centrifugal cascade spinners. The velocity is usually below 250 m/sec and often below 220 m/sec.

The low density products made in the invention generally have a density of from 10 to 50, often 20 to 30 up to 40 or 50kg/m³. The primary air velocity for such products is preferably 50 to 90m/sec, generally 50 to 80m/sec.

As an example of the invention, a rock melt is fiberised on a cascade spinner. A primary air velocity of around 75m/sec and a primary air volume of 5000Nm³/hr and a secondary air volume of about 2000Nm³/hr is used with addition of 3% binder and conventional cross-lapping, compression and curing to give a product having a density of 150kg/m³. The de-lamination strength of the product is in the range 18 to 22kN/m².

When the product having the same binder content and the same density is made on the same apparatus from the same melt but using a primary air velocity of around 125m/sec, a primary air volume of around 8000Nm³/hr and secondary air volume of around 5500Nm³/hr, the de-lamination strength has increased to around 28 to 36kN/m².

When the higher air velocity is used for making a low density product on the same apparatus from the same melt (but with modification of the fibre collection and compressing conditions to conditions conventional for low density products), the product has inferior tensile strength and elasticity compared to when the corresponding product is made using lower air velocity.

## Claims

1. A process of making man-made vitreous fibre products using apparatus comprising
a set of at least three rotors mounted on a housing each rotating about a different substantially horizontal axis and arranged such that when the rotors are rotating melt poured onto the periphery of the top rotor in the set is thrown onto the periphery of each subsequent rotor in turn and fibres are thrown off the rotors,
air supply means for blowing the fibres axially forward from the at least three rotors and along the chamber and which comprise a primary air supply slot-shaped orifice associated with each said subsequent rotor wherein each slot has an internal diameter substantially the same as the external diameter of the periphery of its associated rotor and is constructed for discharging a primary air blast substantially parallel to that periphery as a wall jet, and
binder supply means on or adjacent to the spinner for spraying binders onto the fibres as they are thrown off the rotors and carried forward from the rotors,
and in which fibres are formed by pouring melt onto the top rotor while the rotors are rotating, the primary air blasts are being discharged and the binder is being sprayed outwardly, and thereby forming a cloud of fibres and binder traveling forwards from the spinner, and collecting the fibres and binder from the cloud as a web and consolidating and curing the web or a batt formed of a laminate of the web,
and the process is conducted alternately,
(a) with each primary air blast having a velocity of at least 100m/sec and the product is consolidated to a density of at least 70kg/m³ and
(b) with each primary air blast having a lower velocity of below 100m/sec and the product is consolidated to a density of below 70kg/m³.

2. A process according to claim 1 in which the binder supply means comprise at least one binder discharge orifice on each of the subsequent rotors positioned within the periphery of the rotor and rotating with the rotor for spraying additive outwardly onto the fibres as they are thrown off the rotor.

3. A process according to claim 1 or claim 2 in which process (a) is conducted with the primary air blast having a velocity of 110 to 250m/sec and the consolidation is conducted to a density of at least 100kg/m³, and in which process (b) is conducted using a primary air blast having a velocity of 50 to 90m/sec and the consolidation is conducted to a density of 10 to 50kg/m³.

4. A process according to claim 1 or claim 2 in which process (a) is conducted with the primary air blast having a velocity of 110 to 300m/sec and the consolidation is conducted to a density of at least 90kg/m³, and in which process (b) is conducted using a primary air blast having a velocity of 50 to 90m/sec and the consolidation is conducted to a density of 10 to 50kg/m³.

5. A process according to any preceding claim in which secondary air supplied at a velocity of 50 to 100% of the velocity of the primary air through slots displaced outwardly from the primary air slots.

## Patentansprüche

1. Verfahren zur Herstellung von künstlichen glasartigen Faserprodukten unter Verwendung einer Vorrichtung umfassend
einen Satz von mindestens drei auf einem Gehäuse montierten Rotoren, die jeweils um eine verschiedene, im wesentlichen horizontale Achse rotieren und so angeordnet sind, dass beim Rotieren der Rotoren auf die Peripherie des oberen Rotors im Satz gegossene Schmelze auf die Peripherie jedes folgenden Rotors der Reihe nach geschleudert wird und Fasern von den Rotoren abgeschleudert werden,
ein Luftzufuhrmittel zum axial nach vorne Blasen der Fasern von den mindestens drei Rotoren entlang der Kammer, welches eine schlitzförmige Öffnung für die primäre Luftzufuhr umfasst, die mit jedem der genannten folgenden Rotoren verbunden ist, wobei jeder Schlitz einen Innendurchmesser aufweist, der im wesentlichen gleich ist wie der Außendurchmesser der Peripherie des damit verbundenen Rotors und so gestaltet ist, um einen primären Luftstrahl im wesentlichen parallel zu dieser Peripherie als Wandstrahl auszustoßen,
ein Bindemittelzufuhrmittel auf der oder angrenzend zur Schleudervorrichtung zum Sprühen von Bindemitteln auf die Fasern, wenn sie von den Rotoren abgeschleudert und von den Rotoren nach vorne befördert werden,
in welchem Fasern durch Gießen von Schmelze auf den oberen Rotor gebildet werden, während die Rotoren rotieren, die primären Luftstrahlen ausgestoßen werden und das Bindemittel nach außen gesprüht wird, wodurch eine Wolke von Fasern und Bindemitteln gebildet wird, die sich von der Schleudervorrichtung nach vorne bewegt, und die Fasern und das Bindemittel von der Wolke als Bahn gesammelt werden und die Bahn oder ein aus einem Laminat der Bahn gebildetes Vlies konsolidiert und gehärtet werden,
und das Verfahren abwechselnd durchgeführt wird
(a) mit primären Luftstrahlen jeweils mit einer Geschwindigkeit von mindestens 100 m/s, wobei das Produkt zu einer Dichte von mindestens 70 kg/m³ konsolidiert wird, und
(b) mit primären Luftstrahlen mit jeweils einer niedrigeren Geschwindigkeit von unter 100 m/s, wobei das Produkt zu einer Dichte von unter 70 kg/m³ konsolidiert wird.

2. Verfahren nach Anspruch 1, in welchem das Bindemittelzufuhrmittel mindestens eine Bindemittel-Auslassöffnung an jedem der folgenden Rotoren umfasst, die sich in der Peripherie des Rotors befindet und mit dem Rotor rotiert, um Additiv nach außen auf die Fasern zu sprühen, wenn sie vom Rotor abgeschleudert werden.

3. Verfahren nach Anspruch 1 oder Anspruch 2, in welchem Verfahren (a) mit einem primären Luftstrahl mit einer Geschwindigkeit von 110 bis 250 m/s durchgeführt wird, wobei die Konsolidierung zu einer Dichte von mindestens 100 kg/m³ durchgeführt wird, und in welchem Verfahren (b) unter Verwendung eines primären Luftstrahls mit einer Geschwindigkeit von 50 bis 90 m/s durchgeführt wird, wobei die Konsolidierung zu einer Dichte von 10 bis 50 kg/m³ durchgeführt wird.

4. Verfahren nach Anspruch 1 oder Anspruch 2, in welchem Verfahren (a) mit einem primären Luftstrahl mit einer Geschwindigkeit von 110 bis 300 m/s durchgeführt wird, wobei die Konsolidierung zu einer Dichte von mindestens 90 kg/m³ durchgeführt wird, und in welchem Verfahren (b) unter Verwendung eines primären Luftstrahls mit einer Geschwindigkeit von 50 bis 90 m/s durchgeführt wird, wobei die Konsolidierung zu einer Dichte von 10 bis 50 kg/m³ durchgeführt wird.

5. Verfahren nach irgendeinem vorhergehenden Anspruch, in welchem sekundäre Luft mit einer Geschwindigkeit von 50 bis 100% der Geschwindigkeit der primären Luft durch Schlitze zugeführt wird, die von den primären Luftschlitzen nach außen verschoben sind.

## Revendications

1. Procédé de fabrication de produits de fibres vitreuses synthétiques à l'aide d'un appareil qui comprend :
un ensemble d'au moins trois rotors montés sur un boîtier, tournant chacun autour d'un axe pratiquement horizontal différent et disposés de manière que, lorsque les rotors tournent, la matière fondue qui coule à la périphérie du rotor supérieur de l'ensemble soit projetée sur la périphérie de chaque rotor suivant à son tour et que des fibres soient projetées par les rotors,
un dispositif d'alimentation en air destiné à souffler les fibres axialement vers l'avant des trois rotors au moins et le long de la chambre et qui comporte un orifice en forme de fente de transmission d'air primaire, associé à chaque rotor suivant, dans lequel chaque fente a un diamètre interne pratiquement égal au diamètre externe de la périphérie du rotor associé et a une construction permettant l'évacuation d'un souffle d'air primaire pratiquement parallèle à la périphérie sous forme d'un jet de paroi, et
un dispositif d'alimentation en liant placé sur l'organe de filage ou près de celui-ci pour la pulvérisation de liant sur les fibres lorsqu'elles sont projetées à distance des rotors et entraînées vers l'avant depuis les rotors, et
dans lequel les fibres sont formées par coulée de matière fondue sur le rotor supérieur alors que les rotors tournent, les souffles d'air primaire étant évacués et le liant étant projeté vers l'extérieur, avec formation de cette manière d'un nuage de fibres et de liant se déplaçant vers l'avant depuis l'organe de filage, et la collecte des fibres du liant du nuage sous forme d'une nappe et la consolidation et la cuisson de la nappe ou d'un feutre formé d'un stratifié de la nappe, et
le procédé est mis en oeuvre en alternance
(a) avec chaque souffle d'air primaire ayant une vitesse d'au moins 100 m/s, le produit étant consolidé à une masse volumique d'au moins 70 kg/m³, et
(b) avec chaque souffle d'air primaire ayant une vitesse inférieure à 100 mm/s, le produit étant consolidé à une masse volumique inférieure à 70 kg/m³.

2. Procédé selon la revendication 1, dans lequel le dispositif d'alimentation en liant comprend au moins un orifice d'évacuation de liant sur chacun des rotors suivants placés à l'intérieur de la périphérie du rotor et tournant avec le rotor pour la pulvérisation d'un additif vers l'extérieur sur les fibres de manière qu'elles soient projetées à distance du rotor.

3. Procédé selon la revendication 1 ou 2, dans lequel une opération (a) est exécutée avec le souffle d'air primaire ayant une vitesse comprise entre 110 et 250 m/s et dans lequel la consolidation est réalisée à une masse volumique d'au moins 100 kg/m³, et dans lequel une opération (b) est exécutée à l'aide d'un souffle d'air primaire ayant une vitesse de 50 à 90 m/s, la consolidation étant réalisée à une masse volumique comprise entre 10 et 50 kg/m³.

4. Procédé selon la revendication 1 ou 2, dans lequel l'opération (a) est exécutée avec le souffle d'air primaire ayant une vitesse de 110 à 300 m/s, la consolidation étant réalisée à une masse volumique d'au moins 90 kg/m³, et dans lequel l'opération (b) est exécutée avec un souffle d'air primaire ayant une vitesse de 50 à 90 m/s, la consolidation étant réalisée à une masse volumique de 10 à 50 kg/m³.

5. Procédé selon l'une quelconque des revendications précédentes, dans lequel l'air secondaire est transmis à une vitesse de 50 à 100 % de la vitesse de l'air primaire par des fentes décalées vers l'extérieur par rapport aux fentes d'air primaire.
